# EUROPEAN PATENT APPLICATION

(11) **EP 1 787 845 A1**
(43) Date of publication of application: **23.05.2007**
(21) Application number: 06255782.2
(22) Date of filing: 10.11.2006
(51) Int. Cl.: B60K 17/16, B60K 17/36

(54) **A tandem axle system**

(30) Priority: 18.11.2005 US 283085
(71) Applicant: DANA CORPORATION, Toledo, OH 43615 (US)
(72) Inventor: Elvins, Francis J., Harrogate North Yorkshire HG3 1LW (GB)
(74) Representative: Cheyne, John Robert Alexander M.

(57) **Abstract**

A tandem axle system having a forward drive axle system connected to a rear drive axle system via a drive shaft. The forward drive axle system uses a hypoid bevel pinion to drive forward half shafts via a forward ring gear. The rear drive axle system uses a spiral bevel pinion to drive rear half shafts via a rear ring gear. A hub reduction system is located at the outboard ends of each half shaft.

## Description

### FIELD OF THE INVENTION

The present invention relates to a tandem axle system for vehicles. More specifically, the present invention relates to a tandem axle system utilizing hub reduction gearing.

### BACKGROUND OF THE INVENTION

Known tandem axle systems for vehicles suffer from several disadvantages. First, the known systems typically have input shafts of the forward drive axle system located in a relatively high position to connect with the drive shaft from the prime mover of the vehicle. This relatively high position results in a tall forward drive axle system housing that takes up space among the frame members of the vehicle.

Second, the known systems utilize a drive shaft to transfer drive from the forward drive axle system to the rear drive axle system. The end of the drive shaft connected to the input shaft of the rear drive axle system must typically be lowered and laterally offset from the end of the drive shaft connected to the output shaft of the forward drive axle system. Those skilled in the art know that it is undesirable to unnecessarily lower and laterally offset the drive shaft as it may result in increased vibration and it may increase the wear on the joints between the drive shaft and the rear drive axle system and the forward drive axle system.

Third, some prior art systems use a spiral bevel pinion in both the forward drive axle system and the rear drive axle system. In the forward drive axle system, sufficient distance must be provided between the spiral bevel pinion and the output shaft, thus contributing to the overall height of the forward drive axle system.

In light of the disadvantages of known tandem axle systems, it would be desirable to have a forward drive axle system with a relatively small height, a drive shaft with a relatively small down angle and a relatively small lateral offset between the forward drive axle system and the rear drive axle system and a forward drive axle system housing and a rear drive axle system housing that provide the greatest ground clearance.

### SUMMARY OF THE INVENTION

The present invention is directed toward a tandem axle system having a forward drive axle system connected to a rear drive axle system via a drive shaft. The forward drive axle system has a hypoid bevel pinion driving a forward ring gear. The forward ring gear drives a first forward half shaft and a second forward half shaft via a forward differential. The rear drive axle system utilizes a spiral bevel pinion to drive a rear ring gear. The rear ring gear drives a first rear half shaft and a second rear half shaft via a rear differential. A separate hub reduction system is located on the opposite end of each of the half shafts from the forward differential and the rear differential. Each hub reduction system comprises a sun gear for engagement with the half shaft. The sun gear is in driving engagement with a plurality of planetary gears within a planet carrier. The planet carrier drives a wheel hub.

### BRIEF DESCRIPTION OF THE DRAWINGS

The above, as well as other advantages of the present invention will become readily apparent to those skilled in the art from the following detailed description when considered in the light of the accompanying drawings in which:
Fig. 1 is a schematic side view of the present invention;
Fig. 2 is a schematic top view of the present invention;
Fig. 3 is a cut-away schematic side view of a component of the invention;
Fig. 4 is a partial, schematic cut-away top view of the component depicted in Fig. 3;
Fig. 5 is a cut-away schematic side view of another component of the invention;
Fig. 6 is a partial, cut-away schematic top view of the component depicted in Fig. 5; and
Fig. 7 is a cut-away schematic side view of yet another component of the invention.

### DETAILED DESCRIPTION OF THE PREFERRED EMBODIMENTS

It is to be understood that the invention may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions, directions or other physical characteristics relating to the embodiments disclosed are not to be considered as limiting, unless the claims expressly state otherwise.

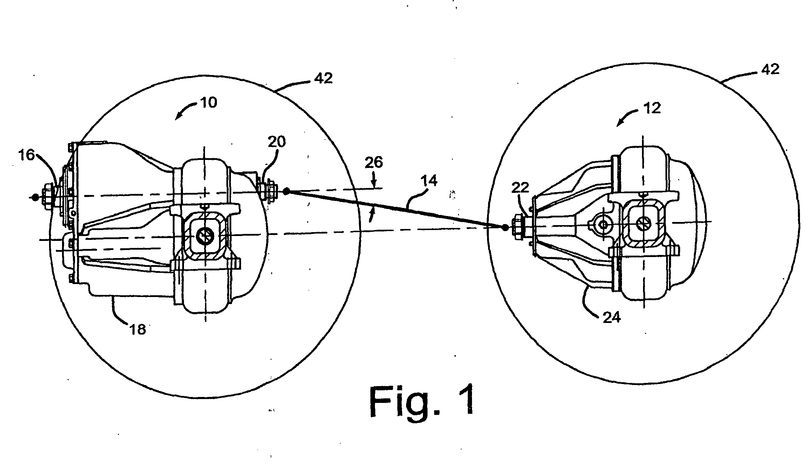

Referring now to Fig. 1, a forward drive axle system 10 and a rear drive axle system 12 for a vehicle, such as a truck, are depicted in a tandem arrangement. The forward drive axle system 10 and the rear drive axle system 12 are connected by a drive shaft 14. A portion of an input shaft 16 of the forward drive axle system 10 is depicted. The input shaft 16 is connected via a yoke (not shown) to a prime mover drive shaft (not shown). The prime mover drive shaft is connected to a prime mover (not shown), such as an internal combustion engine, to provide rotational drive to the prime mover drive shaft, as known by those skilled in the art. The input shaft 16, connected via the yoke to the prime mover drive shaft, thus rotates with the prime mover drive shaft.

The forward drive axle system 10 also comprises a housing 18. The housing 18 may be of one-piece construction or multi-piece construction. The components within the housing 18 will be described in greater detail below. Suffice it to say at this point that drive is transmitted through the forward drive axle system 10 to an output shaft 20, which is partially shown in Fig. 1. The output shaft 20 of the forward drive axle system 10 is connected via a yoke (not shown) to one end of the drive shaft 14. The output shaft 20 provides rotational drive to the drive shaft 14.

The other end of the drive shaft 14 is connected to an input shaft 22, partially depicted in Fig. 1, of the rear drive axle system 12. The rear drive axle system 12 also comprises a housing 24. The housing 24 may be of a one-piece construction or multi-piece construction. The components located within the housing 24 will be described in greater detail below.

Based on Fig. 1, it can be appreciated that the drive shaft 14 angles downwardly at an angle 26 from the output shaft 20 of the forward drive axle system 10 to the input shaft 22 of the rear drive axle system 12.

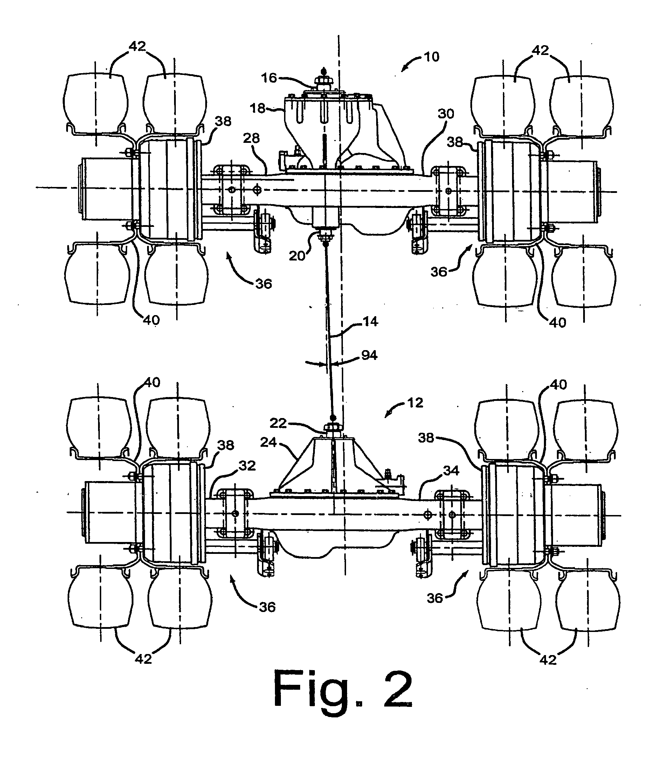

Turning now to Fig. 2, the tandem nature of the forward drive axle system 10 and the rear drive axle system 12 can also be appreciated. It can also be seen that a first forward half shaft housing 28 and a second forward half shaft housing 30 extend away from the housing 18 of the forward drive axle system 10. A first rear half shaft housing 32 and a second rear half shaft housing 34 also extend away from the housing 24 of the rear drive axle system 12. About the end portions 36 of each half shaft housing 28, 30, 32, 34 there is located a hub 38 and a wheel 40 where the wheel 40 is secured to the hub 38 with a plurality of mechanical fasteners, such as bolts and nuts. Tires 42 are mounted to each wheel 40 in a manner known to those skilled in the art.

The drive shaft 14 connecting the forward drive axle system 10 and the rear drive axle system 12 can also be seen in Fig. 2. It can be appreciated that the drive shaft 14 has a small lateral offset 44 from its connection at one end to the output shaft 20 of the forward drive axle system 10 and the input shaft 22 of the rear drive axle system 12.

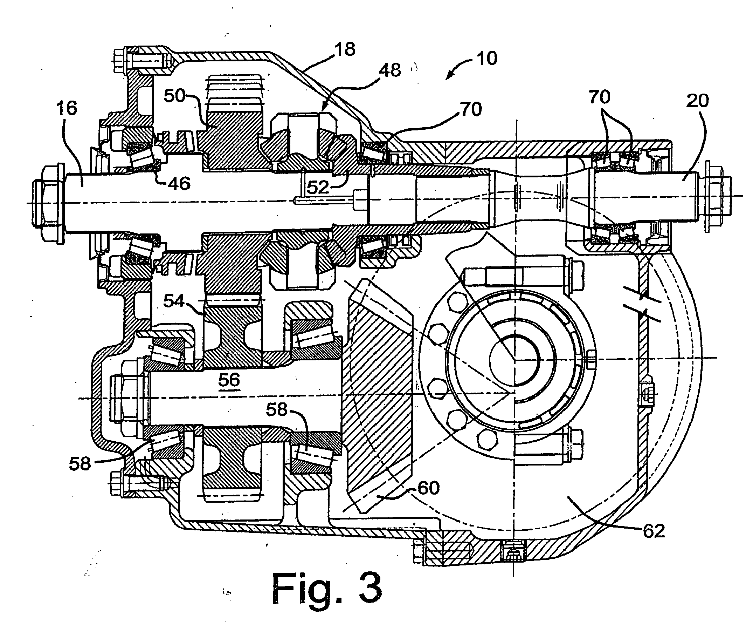

Fig. 3 provides a cut-away side view of the forward drive axle system 10. The input shaft 16 is mounted for rotation within the housing 18 on at least one input bearing 46. An interaxle differential 48 is mounted on the input shaft 16 for rotation therewith. The interaxle differential 48 divides the rotational drive from the input shaft 16 between a first helical gear 50 and a side gear 52.

The first helical gear 50 drives a second helical gear 54 located beneath the first helical gear 50. The second helical gear 54 is mounted on a forward pinion shaft 56. The forward pinion shaft 56 is mounted for rotation within the housing 18 on at least two bearings 58. A hypoid bevel pinion 60 is located on the end of the forward pinion shaft 56. The hypoid bevel pinion 60 is drivingly connected to a forward ring gear 62A.

A hypoid bevel pinion 60 is preferably used in the forward drive axle system 10 because, with its lower position on the forward ring gear 62, it does not interfere with the input shaft 16 as a spiral bevel pinion would. The hypoid bevel pinion 60 thus permits the input shaft 16 to be mounted lower in the forward drive axle system housing 18, thus resulting in a vertically compressed forward drive axle system 10 compared to the prior art designs.

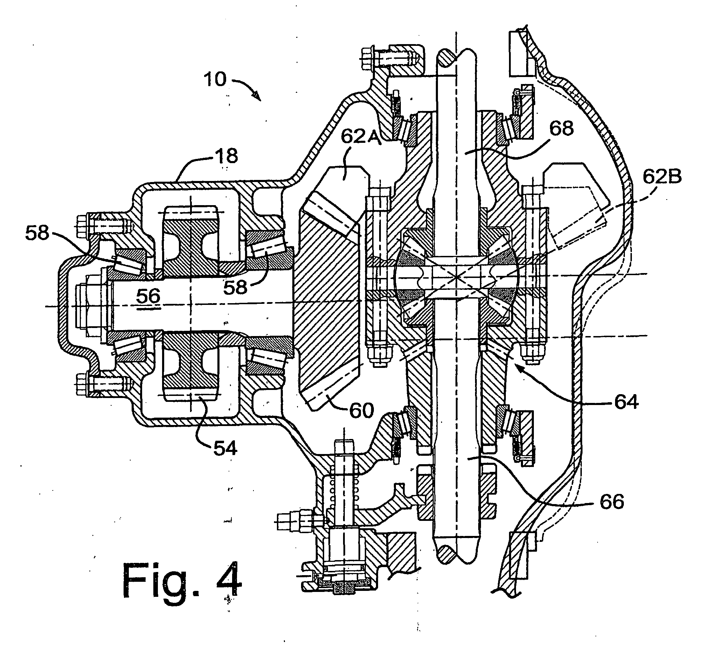

As shown in Fig. 4, the forward ring gear 62A is fixed to a forward differential 64, also within the housing 18. The forward differential 64 divides rotational drive from the ring gear 62 to a first forward half shaft 66 and a second forward half shaft 68.

The position of another ring gear 62B is depicted in Fig. 4. Thus, it can be appreciated that forward gear sets, comprising the ring gear and the pinion gear, can be of various sizes without departing from the scope of the present invention. Although not shown in Figs. 3 or 4, it should be appreciated that the pinion 60 can be of a size other than as shown.

Referring back now to Fig. 3, it can be seen that the side gear 52 is connected to the output shaft 20 to provide drive to the drive shaft 14. The output shaft 20 is mounted for rotation in the housing 18 with at least two bearings 70, with three bearings being shown in Fig. 3. It can be appreciated, based on Figs. 3 and 4, that the first and second forward half shafts 66, 68 are located below the output shaft 20. It can also be seen that the hypoid bevel pinion 60 is located below the input shaft 16 and the output shaft 20 in the forward drive axle system 10.

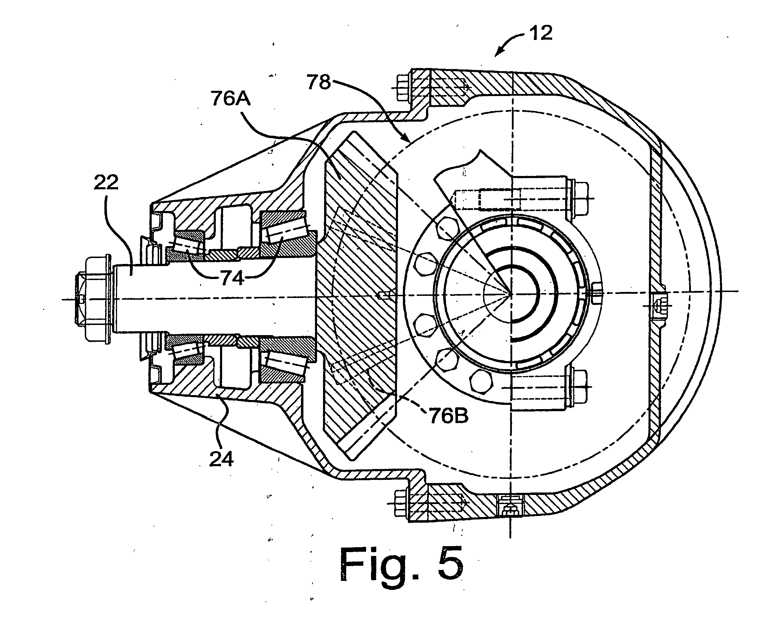

A cut-away side view of the rear drive axle system 12 in Fig. 5 schematically depicts certain components thereof. Specifically, the input shaft 22 can be seen rotatingly mounted within the housing 24 on at least two bearings 74. A spiral bevel pinion 76A is located on the end of the input shaft 22. The spiral bevel pinion 76A is co-axial with the input shaft 22.

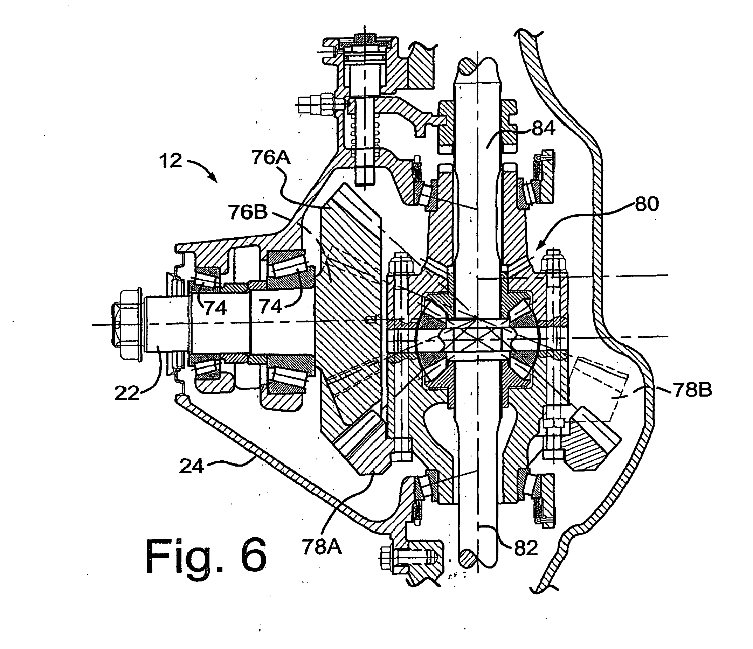

The spiral bevel pinion 76A is engaged with a rear ring gear 78A. It can be appreciated that the spiral bevel pinion 76A reduces the overall height required for the rear drive axle system housing 24 as compared to a hypoid bevel pinion. The rear ring gear 78A is connected to a rear differential 80, as shown in Fig. 6. The rear differential 80 divides the rotational drive provided by the ring gear 78A between a first rear axle half shaft 82 and a second rear axle half shaft 84.

The first and second forward axle half shafts 66, 68 and the first and second rear axle half shafts 82, 84, each located within their respective half shaft housings 28, 30, 32, 34, extend away from their respective differentials 64, 80. The present discussion will now focus solely on a single axle half shaft and its interaction with a hub reduction system 87 for purposes of clarity and conciseness. It should be understood that in the preferred embodiment the following structures and components of the reduction system 87 are located at an outboard end portion 86 of each of the above described axle half shafts 66, 68, 82, 84.

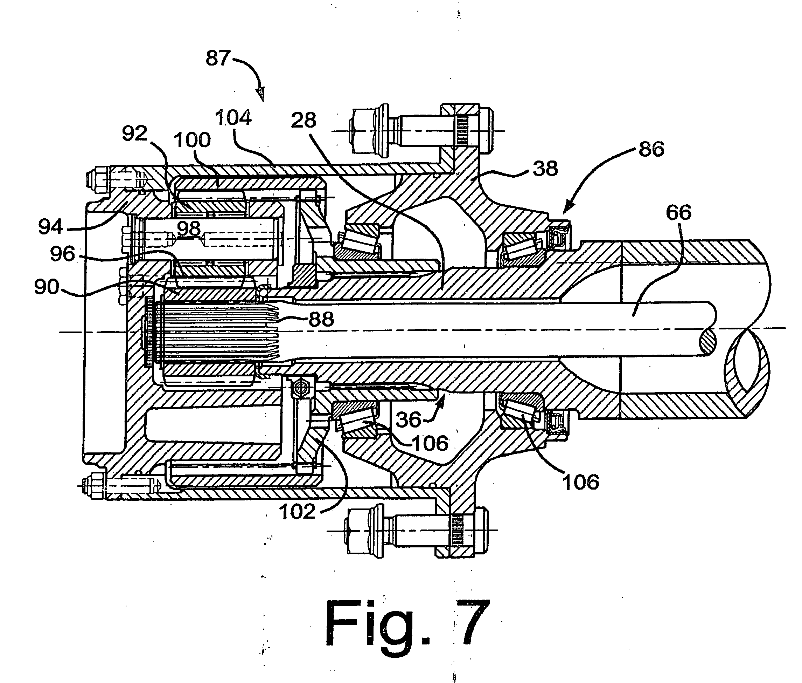

An axle half shaft, for example first forward axle half shaft represented by reference numeral 66, has a plurality of teeth 88 located about its outboard end portion 86, as seen in Fig. 7. A sun gear 90 is preferably directly engaged with the teeth 88 and thus rotates with the first forward axle half shaft 66. A plurality of planetary gears 92 are located in a planet carrier 94 about the sun gear 90. The number of planetary gears 92 may vary, however, in the presently described embodiment it is preferred that three planetary gears 92 are located in the planet carrier 94. The planetary gears 92 are each preferably directly engaged with a set of teeth 96 of the sun gear 90. As seen in Fig. 7, it is preferred that the planetary gears 92 be located directly radially outward from the sun gear 90. Each planetary gear 92 is located on a shaft 98. The shaft 98 is connected to the carrier 94 by a mechanical fastener.

Each planetary gear 92 is also engaged with an annulus gear 100. The annulus gear 100 is prevented from rotating as it is secured to the housing 28 for the first forward axle half shaft 66. A flange member 102 connects the annulus gear 100 with the housing 28 for the first forward axle half shaft 66. It can be appreciated that the planet carrier 94 is thus forced to rotate by virtue of its interaction of the planetary gears 92. The planet carrier 94 is attached to the wheel hub 38 by a member 104 extending over the annulus gear 100. The member 104 urges the wheel hub 38, and thus the tire 42, or tires, attached to it, to rotate and move the vehicle the over the ground. Bearings 106 are located between the first forward axle half shaft housing 28 and the wheel hub 38 to permit the rotation.

The position of another pinion 76B and another ring gear 78B are depicted in Figs. 5 and 6. Thus, it can be appreciated that rear gear sets, comprising the ring gear and the pinion gear, can be of various sizes without departing from the scope of the present invention.

In accordance with the provisions of the patent statutes, the present invention has been described in what is considered to represent its preferred embodiments. However, it should be noted that the invention can be practiced otherwise than as specifically illustrated and described without departing from its spirit or scope.

## Claims

1. A tandem axle system, comprising:
a forward drive axle system comprising a hypoid bevel pinion driving a forward ring gear, said forward ring gear driving a first forward half shaft and a second forward half shaft via a forward differential;
a rear drive axle system comprising a spiral bevel pinion driving a rear ring gear, said rear ring gear driving a first rear half shaft and a second rear half shaft via a rear differential;
a drive shaft connecting said forward drive axle system with said rear drive axle system;
a hub reduction system on the opposite end of each of said half shafts from said forward differential and said rear differential, wherein each hub reduction system comprises a sun gear for engagement with said half shaft, said sun gear driving a plurality of planetary gears within a planet carrier, said planet carrier driving a wheel hub.

2. The system of claim 1, wherein said first forward half shaft and said second forward half shaft are located below both an input shaft and an output shaft of said forward drive axle system.

3. The system of claim 2, wherein said hypoid bevel pinion is located below both said input shaft and said output shaft of said forward drive axle system.

4. The system of claim 3, wherein said drive shaft is angled down and laterally offset from said output shaft of said forward drive axle system to an input shaft of said rear drive axle system.

5. The system of claim 4, wherein said input shaft and said spiral bevel pinion, both of said rear drive axle system, are coaxial with one another.

6. A tandem axle system, comprising:
a forward drive axle system comprising an input shaft driving an interaxle differential, said interaxle differential driving helical gears and an output shaft wherein said helical gears drive a hypoid bevel pinion, said hypoid bevel pinion directly driving a forward ring gear, said forward ring gear driving a forward differential wherein an inboard portion of a first forward half shaft and an inboard portion of a second forward half shaft are connected to said forward differential;
a rear drive axle system comprising an input shaft directly driving a spiral bevel pinion, wherein said spiral bevel pinion drives a rear ring gear and said rear ring gear drives a rear differential wherein an inboard portion of a first rear half shaft and an inboard portion of a second rear half shaft are connected to said rear differential;
a drive shaft connecting said output shaft of said forward drive axle system with said input shaft of said rear drive axle system; and
a separate hub reduction system connected to an outboard portion of each of said half shafts wherein each hub reduction system comprises said outboard portion of said half shaft being connected to a sun gear, said sun gear driving a plurality of planetary gears, wherein each of said planetary gears are in mesh with a stationary annulus gear and said planetary gears being located within a planet carrier connected to a wheel hub.

7. The system of claim 6, wherein said input shaft and said output shaft of said forward drive axle system are located both above said first forward half shaft and said second forward half shaft.

8. The system of claim 6, wherein said hypoid bevel pinion of said forward drive axle system is located below both said input shaft and said output shaft, also both of said forward drive axle system.

9. The system of claim 6, wherein said drive shaft is angled down and laterally offset from said output shaft of said forward drive axle system to said input shaft of said rear drive axle system.

10. The system of claim 6, wherein said input shaft and said spiral bevel pinion, both of said rear drive axle system, are coaxial with one another.
